# EUROPÄISCHE PATENTSCHRIFT

(11) **EP 1 264 388 B1**
(45) Veröffentlichungstag und Bekanntmachung des Hinweises auf die Patenterteilung: **04.07.2007**
(21) Anmeldenummer: 01931534.0
(22) Anmeldetag: 16.03.2001
(51) Int. Cl.: H02K 41/02, F16C 29/02

(54) **LINEARANTRIEB**
LINEAR DRIVE
MECANISME D'ENTRAINEMENT LINEAIRE

(30) Priorität: 17.03.2000 DE 10013045; 17.03.2000 DE 10013046
(43) Veröffentlichungstag der Anmeldung: 11.12.2002
(73) Patentinhaber: AeroLas GmbH Aerostatische Lager-Lasertechnik, 82008 Unterhaching (DE)
(72) Erfinder: BRUECKL, Stefan, 82041 Deisenhofen (DE); SLOTTA, Georg, 85375 Neufahrn (DE); MUTH, Michael, 81737 München (DE); MIKSCH, Gerhard, 81543 München (DE); WERMUND, Ulrich, 81667 München (DE)
(74) Vertreter: Schlimme, Wolfram
(86) Internationale Anmeldenummer: PCT/EP2001/003014
(87) Internationale Veröffentlichungsnummer: WO 2001/069764

(56) Entgegenhaltungen:
- EP-A- 0 267 416
- US-A- 4 974 107
- US-A- 5 645 354
- US-A- 5 962 937

## Beschreibung

Die Erfindung betrifft einen Linearantrieb mit zumindest einem stationären Führungskörper und einem entlang einer vom Führungskörper bestimmten Bewegungsbahn translatorisch bewegbaren Schlitten und zumindest einen symmetrisch zur Bewegungsbahn angeordneten Linearmotor, wobei der Linearmotor zumindest ein erstes, stationäres Motorelement und ein zweites, bewegbares Motorelement, welches mit dem Schlitten verbunden ist, aufweist.

Linearantriebe sind allgemein bekannt. Beim Beschleunigen und Abbremsen eines Linearantriebs wirken Momentenbelastungen auf den Schlitten, die daher rühren, daß die im Linearmotor erzeugten Beschleunigungskräfte über Stützlager und Führungslager des Schlittens abgestützt werden, so daß sich zwischen dem Angriffsort der Beschleunigungskräfte am Schlitten und dem Angriffsort der Abstützkräfte am Schlitten Biegespannungen aufbauen. Je höher die Beschleunigung des Linearantriebs ist, desto höher sind die auf den Schlitten wirkenden Momentenbelastungen, so daß ein derartiger Linearantrieb für hohe Beschleunigungen mit einem entsprechend steifen und damit auch schweren Schlitten ausgestattet werden muß, um eine Formänderung des Schlittens zu verhindern. Die damit verbundene hohe Masse des Schlittens steht aber der Erzielung einer hohen Beschleunigung wieder entgegen.

Die EP 0 267 416 A2 offenbart einen Linearmotor, bei welchem ein Stator mit einem Stützelement fest-verbunden ist. Der bezüglich des Stators linear bewegbare Anker ist mit einem vom Stützelement geführten Übertragungselement befestigt. Zwischen dem Stützelement und dem Übertragungselement ist ein Luftlager ausgebildet. Bei diesem bekannten Linearantrieb ist der Linearmotor unterhalb des als Führungskörper dienenden Stützelements gelegen, so dass die Bewegungsbahn des Schlittens vom Linearmotor beabstandet ist, wodurch dir Gefahr des Verkantens des Schlittens auf dem Stützelement besteht.

Die US-A-4,974,107 offenbart einen Antrieb für einen Schreib-/Lesekopf eines magnetischen Speichermediums. Der Antrieb besteht dabei aus einer Art Linearmotor von welchem eine Tragstruktur für die Schreib-/Leseköpfe linear bewegt wird. Dabei ist der Linearmotor so angeordnet, dass die Spulenachse und damit dessen Bewegungslinie (Kraftvektor) in der Nähe des Schwerpunkts der gesamten Tragstruktur liegt.

Bei wälzgelagerten Führungen können die Wälzkörper aufgrund ihrer Trägheit zudem bei hohen Beschleunigungen nicht mehr gemäß ihrer Kinematik abrollen, sondern beginnen zu gleiten, wodurch an den Wälzlagern eine erhöhte Reibung und ein erhöhter Verschleiß auftreten.

Um hohe Beschleunigungen eines Linearantriebs zu erzielen, ist es somit anzustreben, die Reibung in den Stützlagern und den Führungslagern des Schlittens zu minimieren. Der Linearantrieb besitzt dabei den entscheidenden Vorteil, daß er selbst berührungslos arbeitet. Dieser Vorteil wirkt sich besonders bei hohen Beschleunigungen vorteilhaft aus, wird aber durch die Verwendung wälzgelagerter Führungen oder von Gleitführungen wieder zunichte gemacht.

Es ist die Aufgabe der vorliegenden Erfindung, einen Linearantrieb mit zumindest einem stationären Führungskörper und einem entlang einer vom Führungskörper bestimmten Bewegungsbahn translatorisch bewegbaren Schlitten anzugeben, der für sehr hohe Beschleunigungen ausgelegt ist.

Diese Aufgabe wird gemäß Anspruch 1 gelöst von einem gattungsgemäßen Linearantrieb, bei dem die bewegliche Einheit aus Schlitten und bewegbaren Motorelementen an zumindest einem der stationären Teile, dem Führungskörper und/oder dem stationären Motorelement, mittels Gaslagerelementen berührungsfrei gelagert ist und bei dem der resultierende Wirkungsschwerpunkt der Antriebskräfte des Linearmotors, im Querschnitt des Schlittens betrachtet, mit dem Masse-Gesamtschwerpunkt der beweglichen Einheit aus Schlitten und bewegbarem Motorelement im wesentlichen zusammenfällt.

Durch die Lagerung des Schlittens mittels Gaslagerelementen ist der Schlitten berührungsfrei bewegbar, so daß die Reibung in den Stützlagern und in den Führungslagern des Linearantriebs minimiert wird.

Die Anordnung des Linearmotors derart, daß der resultierende Wirkungsschwerpunkt der Antriebskräfte des Linearmotors, im Querschnitt des Schlittens betrachtet, mit dem Masse-Gesamtschwerpunkt der beweglichen Einheit aus Schlitten und bewegbarem Motorelement im wesentlichen zusammenfällt sorgt dafür, daß beim Beschleunigen keine Momente um die Querachse des Schlittens entstehen, so daß ein Verkanten des Schlittens auf den Stützlagern (Nickbewegung) ausgeschlossen ist.

Vorteilhafterweise sind zwei symmetrisch zur Bewegungsbahn angeordnete Linearmotoren vorgesehen, wobei sich eine Verbindungslinie der jeweiligen Wirkungsschwerpunkte der Antriebskräfte der beidseitig vom Schlitten angeordneten Linearmotoren, im Querschnitt des Schlittens betrachtet, im wesentlichen durch den Masse-Gesamtschwerpunkt der beweglichen Einheit aus Schlitten und bewegbaren Motorelementen erstreckt.

Diese Anordnung der Linearmotoren sorgt ebenfalls dafür, daß beim Beschleunigen keine Momente um die Querachse des Schlittens entstehen, so daß ein Verkanten des Schlittens auf den Stützlagern (Nickbewegung) auch bei einem solchen Aufbau eines Linearantriebs ausgeschlossen ist.

In einer weiteren vorteilhafte Ausführungsform sind zumindest drei symmetrisch zur Bewegungsbahn angeordnete Linearmotoren vorgesehen, wobei die Verbindungslinien zwischen einander benachbarten Wirkungsschwerpunkten der Antriebskräfte der um den Schlitten herum angeordneten Linearmotoren, im Querschnitt des Schlittens betrachtet, eine gedachte Fläche bilden und wobei der Flächenschwerpunkt dieser Fläche, der den resultierenden Wirkungsschwerpunkt bildet, im wesentlichen mit dem Masse-Gesamtschwerpunkt der beweglichen Einheit aus Schlitten und bewegbaren Motorelementen zusammenfällt.

Auch diese Anordnung der Linearmotoren sorgt dafür, daß beim Beschleunigen keine Momente um die Querachse des Schlittens entstehen, so daß ein Verkanten des Schlittens auf den Stützlagern (Nickbewegung) auch bei einem derartigen Aufbau eines Linearantriebs ausgeschlossen ist.

Vorzugsweise umgreift der Führungskörper den Schlitten zumindest teilweise und der Schlitten ist in Richtung seiner Längsachse translatorisch bewegbar, wobei der Schlitten mittels in den dem Schlitten zugewandten Innenflächen des Führungskörpers vorgesehenen Gaslagerelementen berührungsfrei gelagert ist, wobei der Schlitten an zwei voneinander abgewandten Längsseiten mit jeweils zumindest einer Magnetanordnung versehen ist, die sich jeweils parallel zur Längsachse des Schlittens erstreckt, wobei zwei seitliche, zueinander parallele, stationäre, Spulen aufweisende Motorelemente vorgesehen sind, die jeweils einer Magnetanordnung gegenübergelegen sind, wobei die Magnetanordnungen, in Richtung der Längsachse des Schlittens gesehen, deutlich kürzer sind als die Motorelemente, so daß Motorelemente und Magnetanordnungen zwei parallel zueinander angeordnete Linearmotoren bilden.

Die seitliche Anordnung zweier parallel zueinander gelegener Linearmotoren sorgt dafür, daß die auf den Schlitten vom Linearmotor einwirkenden Kräfte auf beiden Seiten des Schlittens gleichzeitig und gleichmäßig angreifen, so daß Momente um die Hochachse des Schlittens, die bei einem einseitig angebrachten Linearmotor auftreten würden, vermieden werden. Allein durch diese beidseitige symmetrische Anordnung der Linearmotoren wird bereits ein Verkanten des Schlittens in den Führungslagern (Gierbewegung) vermieden. Der Aufbau der Linearmotoren mit den stationär angeordneten, die Spulen aufweisenden Motorelementen und den am Schlitten angebrachten Permanentmagnetanordnungen ermöglicht, daß alle Versorgungsleitungen für die Linearmotoren (Stromversorgung, Wasserkühlung) sowie die Versorgungsleitungen für Druckgas für die in den stationären Führungskörpern befindlichen Gaslagerelemente gestellfest sind und somit nicht bewegt werden müssen. Der Schlitten kann daher äußerst leicht aufgebaut werden, so daß sehr hohe Beschleunigungen des Schlittens möglich sind.

In einer vorteilhaften Ausführungsform weist der Führungskörper U-förmige Gestalt auf und umgreift den Schlitten an drei Seiten.

Alternativ weist der Führungskörper ringförmige Gestalt auf und umgreift den Schlitten umfangsmäßig, wobei dann keine Unterdruckvorspannungs-Lagerung erforderlich ist.

In einer bevorzugten Ausführungsform sind zwei Führungskörper vorgesehen, von denen einer im Bereich eines jeweiligen ersten Endes der parallel angeordneten Motorelemente und der andere im Bereich des jeweiligen zweiten Endes der parallel angeordneten Motorelemente vorgesehen ist, wobei beide Führungskörper koaxial miteinander ausgerichtet sind und wobei die Längserstreckung des Schlittens größer ist als der Abstand zwischen den beiden Führungskörpern. Diese Ausführungsform sorgt für eine hochpräzise Lagerung des Schlittens und ermöglicht einen Translationsweg des Schlittens, der der Länge eines Motorelements abzüglich der Länge einer Magnetanordnung entspricht. Diese Ausgestaltung ist insbesondere für Linearantriebe geeignet, die äußerst schnelle und stark beschleunigte Hubbewegungen durchführen müssen, wie dies beispielsweise in Bestückungsautomaten für die Fertigungstechnik oder in der Meßtechnik erforderlich ist.

Vorzugsweise ist der Schlitten als Hohlrohr ausgebildet, wodurch aufgrund dieser Materialeinsparung eine weitere Gewichtsreduzierung des Schlittens ermöglicht wird. Das Hohlrohr des Schlittens kann dabei aus Leichtmetall oder aus einem Verbundwerkstoff wie einem Kohlefaser-Verbundwerkstoff oder einem Glasfaser-Verbundwerkstoff bestehen, wodurch noch eine weitere Gewichtsreduzierung erreicht werden kann.

In einer vorteilhaften Ausführungsform weist der Schlitten einen rechteckigen, vorzugsweise quadratischen, Querschnitt auf und auch der beziehungsweise die Führungskörper ist beziehungsweise sind als Rechteck-U beziehungsweise als Rechteckring, vorzugsweise als Quadratring, mit einem an den Querschnitt des Schlittens angepaßten Öffnungsquerschnitt zur Aufnahme des Schlittens ausgebildet. Diese Ausgestaltung ermöglicht es, daß der Schlitten verdrehungsfrei translatorisch bewegbar ist.

Vorzugsweise umfassen die Motorelemente eisenbehaftete Spulen.

Die Motorelemente sind in einer bevorzugten Ausführungsform fluidgekühlt, vorzugsweise wassergekühlt, wodurch vermieden wird, daß eine Aufheizung der Motorelemente auftritt, die wiederum durch Strahlungswärme eine Aufheizung und damit eine Verformung des Schlittens und der Führungskörper bewirken würde. Da der dünnwandige Schlitten aus anderem Material besteht als die Führungskörper würde bei einer Aufheizung dieser Elemente eine ungleichmäßige Wärmeausdehnung auftreten, so daß eine sichere Lagerung und Führung des Schlittens in den Führungskörpern nicht mehr gewährleistet sein könnte. Eine Fluidkühlung der Motorelemente vermeidet diese Problematik.

In einer bevorzugten Weiterbildung weisen die Gaslagerelemente in ihrer jeweiligen Lagerfläche eine Mehrzahl von Gasaustrittsdüsen auf, die von einem Druckgas beaufschlagt sind, so daß ein aus den Gasaustrittsdüsen austretender Gasstrom ein homogenes Gaspolster zwischen dem jeweiligen Gaslagerelement und der jeweiligen Oberfläche des Schlittens bildet. Als Gas wird vorzugsweise Druckluft verwendet.

In einer anderen vorteilhaften Ausführungsform ist der Schlitten mittels Gaslagerelementen in einer Stützebene und in einer dazu orthogonalen Führungsebene oder parallel zu dieser am Führungskörper berührungsfrei gelagert ist, wobei der Schlitten an seinen beiden Längsseiten mit jeweils zumindest einem Spulen aufweisenden Schwert versehen ist, das sich parallel zur Stützebene erstreckt, wobei zwei seitliche, zueinander parallele stationäre Magnetschienen vorgesehen sind, die jeweils eine Magnetführungsnut zur berührungslosen Aufnahme der Schwerter aufweisen, wodurch Magnetschienen und Schwerter zwei parallel zueinander angeordnete Linearmotoren bilden.

Die seitliche Anordnung zweier parallel zueinander gelegener Linearmotoren, bei denen das jeweilige die eisenlosen Spulen aufweisende Schwert in einer Magnetführungsnut der Magnetschienen verläuft, sorgt dafür, daß die auf den Schlitten vom Linearmotor einwirkenden Kräfte auf beiden Seiten des Schlittens angreifen, so daß Momente um die Hochachse des Schlittens, die bei einem einseitig angebrachten Linearmotor auftreten würden, vermieden werden. Allein durch diese beidseitige symmetrische Anordnung der Linearmotoren wird bereits ein Verkanten des Schlittens in den Führungslagern (Gierbewegung) vermieden, was bei Wälzlagern zum sogenannten Schubladeneffekt führt, bei dem eine Verklemmung auftritt.

Dieser alternative Linearantrieb ermöglicht ebenfalls eine berührungsfreie Beschleunigung des Schlittens ohne Nick- und Gierbewegungen des Schlittens, so daß keine Momentenlasten auf den Schlitten wirken. Dies wiederum ermöglicht es, den Schlitten leicht und schlank zu bauen, wodurch ein Erreichen hoher Beschleunigungen des Linearantriebs weiter erleichtert wird.

Vorzugsweise weist der Schlitten einen Kufenträger auf, der mit den Gaslagerelementen versehen ist.

Weiter vorzugsweise ist der stationäre Führungskörper mit einer Schlittenführungsnut versehen, deren seitliche Nutwandungen parallel zur Führungsebene verlaufende Führungsflächen bestimmen, auf denen erste Gaslagerelemente geführt sind, die beidseitig an einem Kufenschwert des im Querschnitt T-förmigen Kufenträgers vorgesehen sind. Diese feder- und nutenartige Führung des Schlittens im Führungskörper wird durch die schlanke Bauweise des Schlittens und insbesondere des Kufenschwertes ermöglicht, da die Führungsnut so schmal gehalten werden kann, daß selbst bei einer Verwendung unterschiedlicher Materialien für den Kufenträger (z.B. Aluminium) und den Führungskörper (z.B. Stahl) die aufgrund der Wärmeabgabe der Linearmotoren entstehende Ausdehnung des Führungskörpers und des Kufenschwertes so gering bleibt, daß sie sich nicht negativ auf die Gaslageranordnung zwischen dem Kufenschwert und der Führungsnut auswirkt. Der Lagerspalt dieser Gaslageranordnung verändert sich dabei nur so geringfügig, daß er innerhalb von akzeptablen Toleranzgrenzen bleibt.

Weiter vorzugsweise weist der stationäre Führungskörper in der Stützebene verlaufende Stützflächen auf, auf denen mit zweiten Gaslagerelementen versehene seitliche Kufenschenkel des im Querschnitt T-förmigen Kufenträgers geführt sind.

In einer bevorzugten Weiterbildung weisen die Gaslagerelemente in ihrer der jeweiligen Stützfläche beziehungsweise der jeweiligen Führungsfläche gegenüber gelegenen Lagerfläche eine Mehrzahl von Gasaustrittsdüsen auf, die von einem Druckgas beaufschlagt sind, so daß ein aus den Gasaustrittsdüsen austretender Gasstrom ein homogenes Gaspolster zwischen dem jeweiligen Gaslagerelement und der jeweiligen Stützfläche beziehungsweise der jeweiligen Führungsfläche bildet. Als Gas wird vorzugsweise Druckluft verwendet.

Vorzugsweise sind bei den Ausführungen des erfindungsgemäßen Linearantriebs die Gasaustrittsdüsen in der Lagerfläche eines jeweiligen Gaslagerelements von mittels eines energiereichen Strahls gebohrten Mikrolöchern gebildet, die vorzugsweise kegelförmig ausgebildet sind, wobei deren engster Querschnitt an der Mündung in die Lagerfläche gelegen ist. Diese von Mikrolöchern gebildeten Gasaustrittsdüsen sorgen für ein äußerst gleichmäßiges und homogenes Gaspolster. Diese Ausgestaltung der Gasaustrittsdüsen, die an sich bereits aus der DE 44 36 156 C1 bekannt ist, besitzt den Vorteil, daß der Luftverbrauch der Einzeldüsen äußert niedrig ist und daß eine große Anzahl Düsen für eine hohe statische Tragkraft in den Lagerkörper eingebracht werden kann, ohne dadurch den Gesamtgasverbrauch in unwirtschaftliche Bereiche steigen zu lassen.

In einer weiteren Ausgestaltungsform ist der Schlitten gegenüber dem Führungskörper unterdruckvorgespannt. Diese Unterdruckvorspannung, die durch ein an Bereiche des Schlittens angelegtes Vakuum erfolgen kann, verhindert ein Abheben des Schlittens vom Führungskörper, da durch die Unterdruckvorspannung die im Stützlager entstehenden Gasdruck-Abstoßungskräfte durch die vom Unterdruck erzeugten Anziehungskräfte kompensiert werden.

Vorzugsweise werden die Linearmotoren von einer gemeinsamen Regelungseinrichtung beaufschlagt. Dadurch werden regelungsbedingte Asymmetrien im Antriebs- und Beschleunigungsverhalten der beiden Linearmotoren vermieden, was zusätzlich für eine Vermeidung von Momenten im Schlitten sorgt. Diese gemeinsame Regelung der beiden seitlichen Linearmotoren in Verbindung mit dem symmetrischen Aufbau des gesamten Linearantriebs sorgt dafür, daß die auf den Schlitten einwirkenden Momente um die Hochachse (Y-Achse) minimal werden.

Des weiteren ist es von Vorteil, wenn der Schlitten an einer Außenfläche mit einem Maßstab versehen ist, der sich vorzugsweise über die gesamte Länge des Schlittens in Richtung der Längsachse und damit in Richtung der Bewegungsbahn erstreckt, wobei dem Maßstab gegenüber gelegen zumindest ein stationärer, gestellfester Lesekopf zur Abtastung der Einteilung des Maßstabs angeordnet ist und wobei das vom Lesekopf gebildete Signal an die Regelungseinrichtung zur Regelung des Vorschubs des Schlittens geleitet wird. Durch diese Integration des Maßstabs in den Schlitten wird dieser an einer idealen Lage positioniert, da zwischen dem Maßstab und dem bewegten Schlitten keine zusätzlichen Elemente vorgesehen sind, die eine unerwünschte Elastizität in das aus Schlitten und Maßstab gebildete bewegte System einbringen könnten, so daß die Regelung des Schlittenvorschubs mit minimierter Dämpfung erfolgen kann.

Des weiteren ist es von Vorteil, wenn der Schlitten an seiner Unterseite im Bereich des Führungskörpers mit dem zum Führungskörper weisenden Maßstab versehen ist und wenn der zumindest eine Lesekopf im Führungskörper angeordnet ist. Durch diese Integration des Lesekopfs in den Führungskörper wird auch der Lesekopf an einem idealen Ort positioniert.

Die Erfindung wird nachfolgend anhand von Beispielen unter Bezugnahme auf die Zeichnung näher erläutert, in dieser zeigt:
- **Fig. 1**: eine perspektivische Ansicht eines ersten erfindungsgemäßen Linearantriebs,
- **Fig. 2**: eine Draufsicht auf den ersten erfindungsgemäßen Linearantrieb,
- **Fig. 3**: eine Rückansicht des ersten erfindungsgemäßen Linearantriebs in Richtung des Pfeiles III in Fig. 1,
- **Fig. 4**: eine Stirnansicht eines zweiten erfindungsgemäßen Linearantriebs,
- **Fig. 5**: eine perspektivische Ansicht eines Schlittens des zweiten Linearantriebs aus Fig.4 und
- **Fig. 6**: eine schematische Darstellung einer Stirnansicht eines dritten erfindungsgemäßen Linearantriebs.

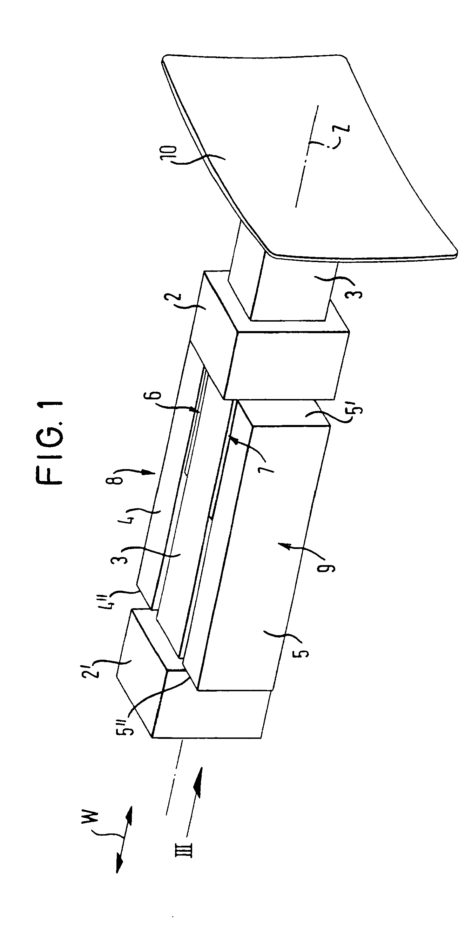

In Fig. 1 ist eine perspektivische Ansicht eines ersten erfindungsgemäßen Linearantriebs dargestellt. Ein aus einem Vierkantrohr mit quadratischen Querschnitt bestehender Schlitten 3 ist axial verfahrbar in zwei in Axialrichtung voneinander beabstandeten Führungskörpern 2, 2' mittels horizontaler und vertikaler Gasdrucklager gelagert. An seiner Vorderseite ist der Schlitten 3 mit einer zu bewegenden Nutzlast 10 versehen. Im dargestellten Beispiel ist dies ein Hohlspiegel.

Zwischen dem vorderen Führungskörper 2 und dem hinteren Führungskörper 2' sind, parallel zum Schlitten 3, ein linkes Motorelement 4 und ein rechtes Motorelement 5 vorgesehen, die, wie die Führungskörper 2, 2', stationär sind. Das erste, vordere Ende 4', 5' des jeweiligen Motorelements 4, 5 ist dem vorderen Führungskörper 2 benachbart gelegen und das zweite, hintere Ende 4", 5" des jeweiligen Motorelements 4, 5 ist dem hinteren Führungskörper benachbart gelegen.

In den Führungskörpern 4, 5 sind in dem Fachmann bekannter Weise Erregerspulen eines Linearantriebs vorgesehen. Des weiteren sind die Motorelemente 4, 5 wassergekühlt. Die Anschlüsse für die Stromversorgung und die Wasserversorgung der Motorelemente 4, 5 sind zur Vereinfachung in den Zeichnungen nicht dargestellt.

Zwischen den Motorelementen 4, 5 und dem Schlitten 3 sind Magnetanordnungen 6, 7 vorgesehen, die am Schlitten 3 befestigt sind und die sich mit diesem bewegen können. Zwischen den seitlichen die Flächen der Magnetanordnungen 6, 7 und der zum Schlitten 3 weisenden inneren Fläche des jeweiligen Motorelements 4, 5 ist ein Luftspalt gebildet.

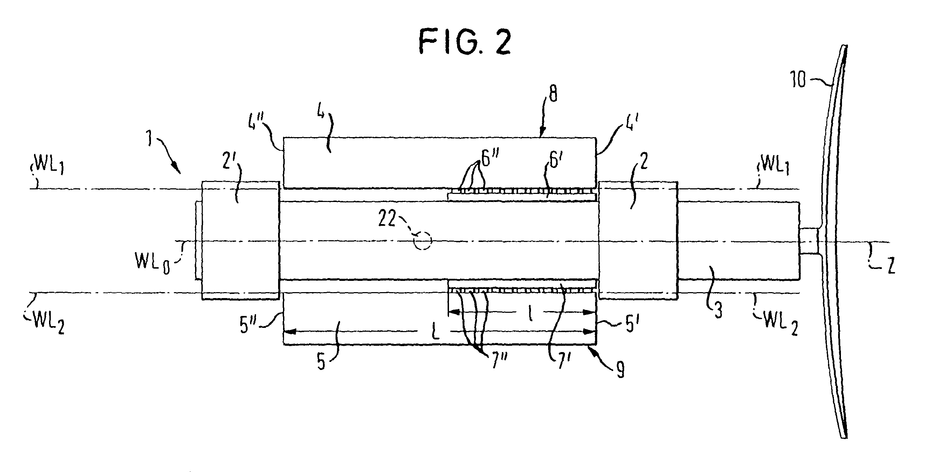

Die Länge 1 der Magnetanordnungen 6, 7, in Richtung der Schlittenachse Z gesehen, ist kürzer als die Länge L eines Motorelement 4, 5, so daß sich der Schlitten 3 zwischen den Führungskörpern 2, 2' in Axialrichtung hin- und herbewegen kann. In den Fig. 1 und 2 ist der Schlitten in seiner nach vorne maximal ausgefahrenen Position gezeigt.

Das jeweilige Motorelement 4, 5 und die diesen zugeordnete Magnetanordnung 6, 7 bilden jeweils einen Linearmotor 8, 9. Die Anordnung der Linearmotoren 8, 9, des Schlittens 3 und der Führungskörper 2, 2' ist spiegelsymmetrisch zu einer durch die Schlittenachse Z verlaufenden Symmetrieebene Y, die im gezeigten Beispiel vertikal verläuft.

In Fig. 2 ist zu sehen, daß die Magnetanordnungen 6, 7 aus einem am Schlitten 3 angebrachten Magnetträger 6', 7' sowie aus einer Mehrzahl von Magneten 6", 7" bestehen, die auf der vom Schlitten 3 abgewandten Außenseite des jeweiligen Magnetträgers 6', 7' in Axialrichtung nebeneinander angeordnet sind. Die jeweilige Magnetanordnung 6, 7 bildet mit dem jeweiligen Motorelement 4, 5 einen Linearmotor 8, 9.

Jeder Linearmotor 8, 9 besitzt, im Querschnitt gesehen, jeweils einen Wirkungsschwerpunkt S₁, S₂, in welchem die Antriebskräfte auf die jeweils zugeordnete Magnetanordnung 6, 7 und damit auf den Schlitten 3 wirken. Unter einem Wirkungsschwerpunkt S₁, S₂ wird der Punkt verstanden, an dem die Resultierende der im Linearmotor 8, 9 auf die jeweils zugehörige Magnetanordnung 6, 7 einwirkenden Antriebskräfte angreift.

Die Verbindungslinie V des Wirkungsschwerpunktes S₁ des linken Linearmotors und des Wirkungsschwerpunktes S₂ des rechten Linearmotors verläuft im gezeigten Beispiel horizontal, und erstreckt sich durch den Schwerpunkt S₀ des Schlittens 3. Räumlich betrachtet bilden die jeweiligen Wirkungsschwerpunkte S₁, S₂ des jeweiligen Linearmotors 8, 9 jeweils eine Gerade WL₁, WL₂, die sich im gezeigten Beispiel parallel zur Längsachse Z des Schlittens 3 erstreckt, so daß beim gezeigten Beispiel die räumliche Bedingung gilt, daß die Verbindungsebene der jeweiligen Wirkungsschwerpunktsgeraden WL₁ und WL₂ durch die von Querschnitts-Schwerpunkten S₀ des Schlittens 3 gebildete, ebenfalls zur Längsachse Z parallele Schwerpunktslinie WL₀ erstreckt. Hierdurch wird gewährleistet, daß beim Beschleunigen des Schlittens keine Nickmomente entstehen.

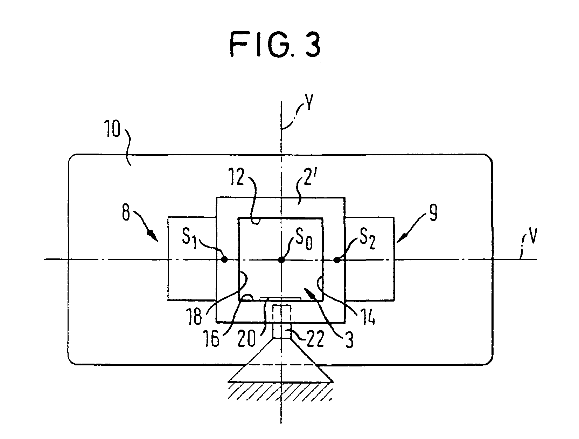

Die Ansicht der Fig. 3 zeigt auch die Lage der Gaslagerelemente 12, 14, 18, 16. Obwohl in Fig. 3 nur der hintere Führungskörper 2' zu sehen ist, gilt der nachfolgend beschriebene Aufbau auch für den vorderen Führungskörper 2.

Die Gaslagerelemente 12, 14, 16, 18 sind auf den Innenflächen des quadratringförmigen Führungskörpers 2' vorgesehen. Ein oberes Gaslagerelement 12 und ein unteres Gaslagerelement 16 verlaufen horizontal und ein rechtes Gaslagerelement 14 sowie ein linkes Gaslagerelement 18 verlaufen vertikal. Die - nicht gezeigten - Gasaustrittsdüsen der Gaslagerelemente 12, 14, 16, 18 weisen in Richtung der zugeordneten oberen, unteren, linken beziehungsweise rechten Seitenfläche des im Querschnitt quadratischen Schlittens 3. Die Gaslagerelemente 12, 14, 16, 18 können entweder als eigenständige Bauteile auf die zugeordnete Innenfläche eines Führungskörpers mit entsprechend größer ausgebildeter Durchtrittsöffnung aufgebracht sein, sie können aber auch integral in den Führungskörper eingearbeitet sein.

Der Schlitten 3 ist an seiner Unterseite mit einem Maßstab 20 versehen, der entweder steif und fest mit dem Schlitten 3 verbunden ist oder der an der unteren Fläche des Schlittens 3 unmittelbar aufgebracht ist. Bei dem Maßstab 20 handelt es sich vorzugsweise um einen Linearmaßstab mit einer Vielzahl von gleich voneinander beabstandeten Einteilungen. Unterhalb des Schlittens 3 ist zumindest ein Lesekopf 22 gestellfest und damit stationär angeordnet, der die Einteilungen des Maßstabs 20 erfaßt, wenn sich der Schlitten 3 über den Lesekopf 22 bewegt und der daraus ein Signal für die Bewegung des Schlittens 3 bildet, welches an eine - nicht gezeigte - Regelungseinrichtung für den Schlittenvorschub geleitet wird. Auf diese Weise kann der Schlitten 3 mit einer sehr hohen Genauigkeit sowohl bezüglich der Wegstrecke als auch bezüglich der Geschwindigkeit verfahren werden. Diese stationäre Anordnung des Lesekopfes 22 besitzt den Vorteil, daß keine bewegten Kabelverbindungen für die Spannungsversorgung zum und die Datenübertragung vom Lesekopf 22 erforderlich sind, wie dies sonst der Fall wäre, wenn der Lesekopf 22 am bewegten Schlitten 3 angebracht wäre.

Die Führungskörper können auch U-förmig ausgebildet sein, wobei der Schlitten dann über von Unterdruck beaufschlagte Gaslagerelemente im jeweiligen mittleren Schenkel der U-förmigen Führungskörper gegen den Führungskörper vorgespannt wird, um ein Abheben des Schlittens vom Führungskörper zu verhindern. Alternativ können die dort vorgesehenen Gaslagerelemente auch als kombinierte Überdruck-/Unterdrucklager ausgebildet sein.

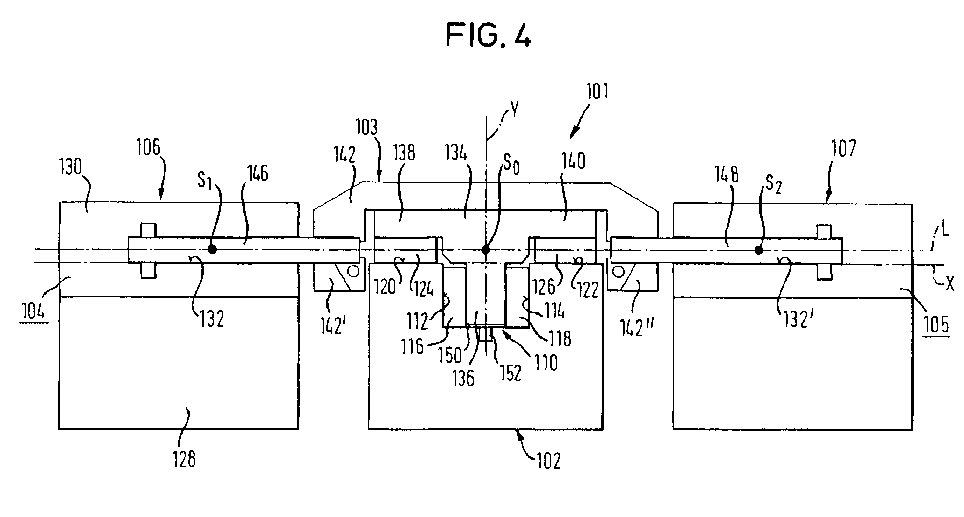

In Fig. 4 ist eine Stirnansicht eines erfindungsgemäßen Linearantriebs dargestellt, wobei die Zeichenebene rechtwinklig zur Stützebene X und zur Führungsebene Y liegt.

Der Linearantrieb 101 umfaßt einen Führungskörper 102, einen Schlitten 103 sowie linke und rechte Magnetschienen 104, 105.

Der Führungskörper 102 ist an seiner Oberseite mit einer zentralen, sich in Längsrichtung des Führungskörpers 102 erstreckenden Schlittenführungsnut 110 versehen, deren seitliche Nutwandungen parallel zur die Symmetrieebene der Schlittenführungsnut 110 bestimmenden Führungsebene Y verlaufen. Die seitlichen Nutwandungen der Schlittenführungsnut 110 bilden Führungsflächen 112, 114, auf denen erste Gaslagerelemente (z.B. Luftlager) 116, 118 des Schlittens 103 geführt sind.

An seiner dem Schlitten zugewandten Oberseite ist der Führungskörper 102 mit in der Stützebene X verlaufenden Stützflächen 120, 122 versehen, die links und rechts neben der Öffnung der Schlittenführungsnut 110 gelegen sind und sich parallel zu dieser in Längsrichtung des Führungskörpers 102 erstrecken. Auf den Stützflächen 120, 122 sind zweite Gaslagerelemente (z.B. Luftlager) 124, 126 des Schlittens geführt.

Links und rechts neben dem Führungskörper 102 sind, von diesem beabstandet, eine linke beziehungsweise rechte Magnetschiene 104, 105 ebenfalls stationär angeordnet. Der Aufbau der Magnetschienen 104, 105 ist spiegelsymmetrisch zur Führungsebene Y, so daß nachfolgend nur der Aufbau der linken Magnetschiene 104 beschrieben wird, der sinngemäß auch für die rechte Magnetschiene 105 zutrifft. Auf einem Sockel 128 ist ein Permanentmagneten aufweisender Magnetschienenkörper 130 angebracht, der eine in Längsrichtung verlaufende Magnetführungsnut 132 aufweist, die sich zur Mitte, also zur Führungsebene Y, hin öffnet und im wesentlichen horizontal verläuft. Der Magnetschienenkörper 130 besitzt somit im Querschnitt die Gestalt eines liegenden U.

Die Magnetschienen 104, 105 und der Führungskörper 102 bilden in ihrer Längserstreckung die Bewegungsbahn W für den Schlitten 103, dessen Längserstreckung wesentlich kürzer ist.

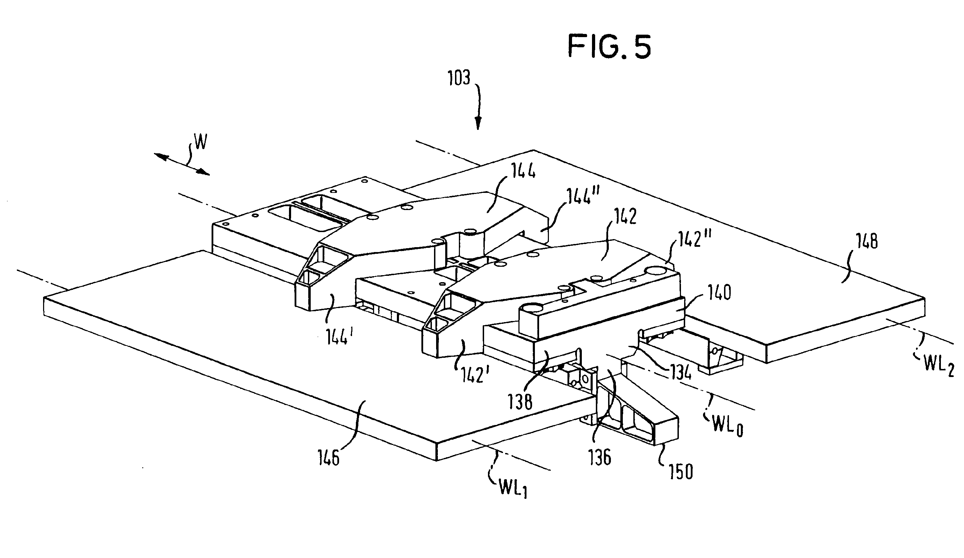

Der in Fig. 5 in perspektivischer Ansicht dargestellte Schlitten 103 umfaßt einen im Querschnitt T-förmigen Kufenträger 134, dessen zentraler vertikaler Schenkel ein Kufenschwert 136 bildet, an dessen voneinander abgewandten Seitenflächen die ersten Gaslagerelemente 116, 118 angebracht sind. Die gesamte Breite des Kufenschwertes 136 mit den daran angebrachten ersten Gaslagerelementen 116, 118 ist geringfügig kleiner als die Breite der Schlittenführungsnut 110, so daß zwischen den außenliegenden Lagerflächen der Gaslagerelemente 116, 118 und den Führungsflächen 112, 114 jeweils ein Luftspalt von etwa 5 bis 10 µm, vorzugsweise 8 µm, gebildet ist. Auch zwischen dem Nutgrund der Schlittenführungsnut 110 und den unteren Flächen des Kufenschwerts 136 und der ersten Gaslagerelemente 116, 118 ist ein Spalt ausgebildet, der diese unteren Flächen vom Nutgrund beabstandet.

Der Kufenträger 134 weist zwei seitliche Kufenschenkel 138, 140 auf die sich quer zum Kufenschwert 136 erstrecken. An der Unterseite des linken Kufenschenkels 138 ist das linke zweite Gaslagerelement 124 so angebracht, daß die Lagerfläche des Gaslagerelements 124 nach unten in Richtung auf die linke Stützfläche 120 des Führungskörpers 102 weist. An der Unterseite des rechten Kufenschenkels 140 ist das rechte zweite Gaslagerelement 126 so angebracht, daß dessen Lagerfläche nach unten in Richtung auf die rechte Stützfläche 122 des Führungskörpers 102 weist.

Der Kufenträger 134 ist über nicht dargestellte, von Unterdruck beaufschlagte Gaslagerelemente an der Unterseite der seitlichen Kufenschenkel 138, 140 gegen den Führungskörper 102 vorgespannt, um ein Abheben des Schlittens 103 vom Führungskörper 102 zu verhindern. Alternativ können die zweiten Gaslagerelemente 124, 126 auch als kombinierte Überdruck-/Unterdrucklager ausgebildet sein.

Auf der Oberseite des Kufenträgers 134 sind zwei jochartige Brückenelemente 142, 144 angebracht, die mit dem Kufenträger 134 fest verbunden sind und die den Kufenträger 134 links und rechts von dessen Kufenschenkeln 138, 140 mit jeweiligen seitlichen Auslegearmen 142', 142", 144', 144" übergreifen. An den jeweiligen linken Auslegearmen 142', 144' der jochartigen Brückenelemente 142, 144 ist ein linkes Schwert 146 angebracht. Auf die gleiche Weise ist an den jeweiligen rechten Armen 142", 144" der jochartigen Brückenelemente 142, 144 ein rechtes Schwert 148 angebracht.

Die Schwerter 146, 148 bestehen aus einem Kunststoff, beispielsweise einem glasfaserverstärkten Harz, in welches die Spulen des eisenlosen Linearantriebs eingelassen sind. Der Aufbau der mit den Spulen versehenen Schwerter 146, 148 eines eisenlosen Linearmotors ist dem Fachmann allgemein bekannt und wird hier daher nicht weiter beschrieben.

In Fig. 4 ist zu erkennen, daß die Schwerter 146, 148 in die jeweilige Magnetführungsnut 132, 132' der linken Magnetschiene 104 beziehungsweise der rechten Magnetschiene 105 eingreifen und zusammen mit dieser den jeweiligen Linearmotor 106, 107 bilden. Jeder Linearmotor 106, 107 besitzt, im Querschnitt gesehen, jeweils einen Wirkungsschwerpunkt S₁, S₂, in welchem die Antriebskräfte auf das jeweils zugeordnete Schwert 146, 148 wirken. Unter einem Wirkungsschwerpunkt S₁, S₂ wird der Punkt verstanden, an dem die Resultierende der im Linearmotor 106, 107 auf das jeweils zugehörige Schwert 146, 148 einwirkenden Antriebskräfte angreift.

Die Verbindungslinie L des Wirkungsschwerpunktes S₁ des linken Linearmotors und des Wirkungsschwerpunktes S₂ des rechten Linearmotors verläuft im gezeigten Beispiel parallel zur Stützebene X, also im gezeigten Beispiel horizontal, und erstreckt sich durch den Schwerpunkt S₀ des Schlittens 103. Räumlich betrachtet bilden die jeweiligen Wirkungsschwerpunkte S₁, S₂ des jeweiligen Linearmotors 106, 107 jeweils eine Gerade WL₁, WL₂, die sich im gezeigten Beispiel parallel zur Bewegungsrichtung W erstreckt, so daß beim gezeigten Beispiel die räumliche Bedingung gilt, daß die Verbindungsebene der jeweiligen Wirkungsschwerpunktsgeraden WL₁ und WL₂ durch die von Querschnitts-Schwerpunkten S₀ des Schlittens 103 gebildete Schwerpunktslinie WL₀ erstreckt.

Aus Gewichtsgründen sind die Kufenträger 134 und vorzugsweise auch die Brückenelemente 142, 144 hohl oder als Skelettstruktur ausgebildet.

Das Kufenschwert 136 ist an seiner zum Grund der Schlittenführungsnut 110 weisenden Fläche mit einem Maßstab 150 versehen, der entweder steif und fest mit dem Kufenschwert 136 verbunden ist oder der an der unteren Fläche des Kufenschwertes 136 unmittelbar aufgebracht ist. Bei dem Maßstab 150 handelt es sich vorzugsweise um einen Linearmaßstab mit einer Vielzahl von gleich voneinander beabstandeten Einteilungen. Am Nutgrund der Schlittenführungsnut 110 ist zumindest ein Lesekopf 152 angeordnet, der die Einteilungen des Maßstabs 150 erfaßt, wenn sich der Schlitten 103 über den Lesekopf 152 bewegt und der daraus ein Signal für die Bewegung des Schlittens 103 bildet, welches an eine - nicht gezeigte - Regelungseinrichtung für den Schlittenvorschub geleitet wird. Auf diese Weise kann der Schlitten 103 mit einer sehr hohen Genauigkeit sowohl bezüglich der Wegstrecke als auch bezüglich der Geschwindigkeit verfahren werden. Diese stationäre Anordnung des Lesekopfes 152 besitzt den Vorteil, daß keine bewegten Kabelverbindungen für die Spannungsversorgung zum und die Datenübertragung vom Lesekopf 152 erforderlich sind, wie dies sonst der Fall wäre, wenn der Lesekopf 152 am bewegten Schlitten 103 angebracht wäre.

Zum Schlitten 103 führende Versorgungsleitungen für den Gasdruck für die Gaslagerelemente, für den Unterdruck für die Unterdruckvorspannung und für die elektrische Versorgung der Spulen in den Schwertern sind zur Vereinfachung nicht dargestellt, der Fachmann weiß jedoch, wie er derartige Versorgungsleitungen vorzusehen hat.

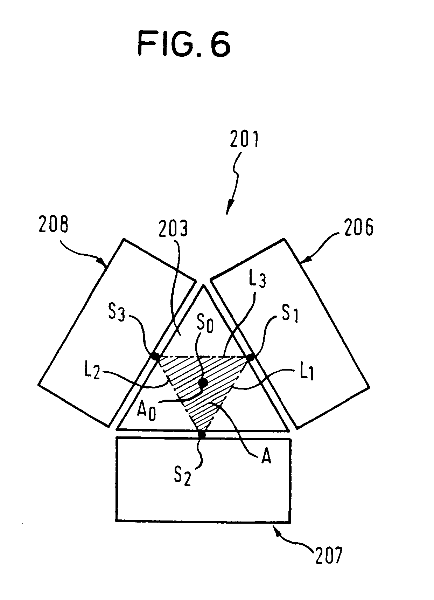

Fig. 6 zeigt eine dritte Ausführungsform eines Linearantriebs 201 gemäß der Erfindung, der einen dreieckigen Schlitten 203 mit dem Querschnitt eines gleichschenkligen Dreiecks sowie drei symmetrisch zur Bewegungsbahn angeordnete Linearmotoren 206, 207, 208 aufweist. Jeder Seite des Schlittens 203 liegt ein Linearmotor 206, 207, 208 gegenüber. Der Aufbau der Linearmotoren entspricht im wesentlichen jenem in den bereits beschriebenen Beispielen der ersten beiden Ausführungsformen.

Die Verbindungslinien L₁, L₂, L₃ zwischen den einander benachbarten Wirkungsschwerpunkten S₁ und S₂, S₂ und S₃ sowie S₃ und S₁ der Antriebskräfte der um den Schlitten 203 herum angeordneten Linearmotoren 206, 207, 208 bilden, im Querschnitt des Schlittens 203 betrachtet, eine gedachte Fläche A (in Fig. 6 schraffiert gezeichnet), deren Flächenschwerpunkt A₀ den resultierenden Wirkungsschwerpunkt aller auf den Schlitten 203 wirkenden Antriebskräfte bildet und der im wesentlichen mit dem Masse-Gesamtschwerpunkt S₀ der beweglichen Einheit aus Schlitten und bewegbaren Motorelementen zusammenfällt. Die Anordnung ist nicht auf drei Linearmotoren beschränkt, sondern kann auf eine nahezu beliebige Anzahl von symmetrisch um den Schlitten herum angeordneten Linearmotoren erweitert werden.

Die Erfindung ist nicht auf die obigen Ausführungsbeispiele beschränkt, die lediglich der allgemeinen Erläuterung des Kerngedankens der Erfindung dienen. Im Rahmen des Schutzumfangs kann die erfindungsgemäße Vorrichtung vielmehr auch andere als die oben beschriebenen Ausgestaltungsformen annehmen. Die Vorrichtung kann hierbei insbesondere Merkmale aufweisen, die eine Kombination aus den jeweiligen Einzelmerkmalen der Ansprüche darstellen. Bezugszeichen in den Ansprüchen, der Beschreibung und den Zeichnungen dienen lediglich dem besseren Verständnis der Erfindung und sollen den Schutzumfang nicht einschränken.

## Patentansprüche

1. Linearantrieb (1; 101; 201) mit
- zumindest einem stationären Führungskörper (2, 2'; 102),
- einem entlang einer vom Führungskörper (2, 2'; 102) bestimmten Bewegungsbahn (W) translatorisch bewegbaren Schlitten (3; 103; 203) und
- einem Linearmotor (8; 106; 207), der zumindest ein erstes, stationäres Motorelement (4, 5; 104, 105) und ein zweites, bewegbares Motorelement (6, 7; 146, 148) aufweist, welches mit dem Schlitten (3; 103; 203) verbunden ist,
- wobei die bewegliche Einheit aus Schlitten (3; 103; 203) und bewegbarem Motorelement (6, 7; 146, 148) an einem stationären Teil des Linearantriebs mittels Gaslagerelementen (12, 14, 16, 18; 116, 118, 124, 126) berührungsfrei gelagert ist,
**dadurch gekennzeichnet,**
- **daß** zumindest ein weiterer Linearmotor (9; 107; 208, 209) vorgesehen ist,
- **daß** die Linearmotoren (8, 9; 106, 107; 207, 208, 209) symmetrisch zur Bewegungsbahn (W) angeordnet sind,
- wobei der resultierende Wirkungsschwerpunkt der Antriebskräfte der Linearmotoren (8, 9; 106, 107; 206, 207, 208), im Querschnitt des Schlittens betrachtet, mit dem Masse-Gesamtschwerpunkt der beweglichen Einheit aus Schlitten (3; 103; 203) und bewegbaren Motorelementen (6, 7; 146, 148) zusammenfällt.

2. Linearantrieb (1; 101) nach Anspruch 1,
**dadurch gekennzeichnet,**
**daß** sich eine Verbindungslinie (V; L) der jeweiligen Wirkungsschwerpunkte (S₁, S₂) der Antriebskräfte der beidseitig vom Schlitten (3; 103) angeordneten Linearmotoren (8, 9; 106, 107), im Querschnitt des Schlittens (3; 103) betrachtet, im wesentlichen durch den Masse-Gesamtschwerpunkt (S₀) der beweglichen Einheit aus Schlitten (3; 103) und bewegbaren Motorelementen (6, 7; 146, 148) erstreckt.

3. Linearantrieb (201) nach Anspruch 1,
**dadurch gekennzeichnet,**
**daß** zumindest drei symmetrisch zur Bewegungsbahn (W) angeordnete Linearmotoren (206, 207, 208) vorgesehen sind, wobei die Verbindungslinien (L₁, L₂, L₃) zwischen einander benachbarten Wirkungsschwerpunkten (S₁, S₂, S₃) der Antriebskräfte der um den Schlitten (203) herum angeordneten Linearmotoren (206, 207, 208), im Querschnitt des Schlittens betrachtet, eine gedachte Fläche (A) bilden und wobei der Flächenschwerpunkt (A₀) dieser Fläche (A), der den resultierenden Wirkungsschwerpunkt bildet, im wesentlichen mit dem Masse-Gesamtschwerpunkt (S₀) der beweglichen Einheit aus Schlitten und bewegbaren Motorelementen zusammenfällt.

4. Linearantrieb (1) nach Anspruch 1, 2 oder 3,
wobei der Führungskörper (2, 2') den Schlitten (3) zumindest teilweise umgreift und wobei der Schlitten (3) in Richtung seiner Längsachse (Z) translatorisch bewegbar ist,
- wobei der Schlitten (3) mittels in den dem Schlitten (3) zugewandten Innenflächen des Führungskörpers (2, 2') vorgesehenen Gaslagerelementen (12, 14, 16, 18) berührungsfrei gelagert ist,
- wobei der Schlitten (3) an zwei voneinander abgewandten Längsseiten mit jeweils zumindest einer Magnetanordnung (6, 7) versehen ist, die sich jeweils parallel zur Längsachse (Z) des Schlittens erstreckt,
- wobei zwei seitliche, zueinander parallele, stationäre, Spulen aufweisende Motorelemente (4, 5) vorgesehen sind, die jeweils einer Magnetanordnung (6, 7) gegenübergelegen sind,
- wobei die Magnetanordnungen (6, 7), in Richtung der Längsachse (Z) des Schlittens gesehen, deutlich kürzer sind als die Motorelemente (4, 5).

5. Linearantrieb nach Anspruch 3,
**dadurch gekennzeichnet,**
**daß** der Führungskörper (2, 2') U-förmige Gestalt aufweist und den Schlitten (3) an drei Seiten umgreift.

6. Linearantrieb nach einem der vorhergehenden Ansprüche,
**dadurch gekennzeichnet,**
- **daß** zwei Führungskörper (2, 2') vorgesehen sind, von denen einer (2) im Bereich eines jeweiligen ersten Endes (4', 5') der parallel zueinander angeordneten Motorelemente (4, 5) und der andere (2') im Bereich des jeweiligen zweiten Endes (4", 5") der parallel zueinander angeordneten Motorelemente (4, 5) vorgesehen ist, wobei beide Führungskörper (2, 2') koaxial miteinander ausgerichtet sind, und
- **daß** die Längserstreckung des Schlittens (3) größer ist, als der Abstand zwischen den beiden Führungskörpern (2, 2').

7. Linearantrieb nach einem der vorhergehenden Ansprüche,
**dadurch gekennzeichnet,**
**daß** der Schlitten (3) als Hohlrohr ausgebildet ist.

8. Linearantrieb nach einem der vorhergehenden Ansprüche,
**dadurch gekennzeichnet,**
**daß** der Schlitten (3) einen rechteckigen, vorzugsweise quadratischen, Querschnitt aufweist und daß der beziehungsweise die Führungskörper (2, 2') als Rechteck-U beziehungsweise als Rechteckring, vorzugsweise als Quadratring, mit einem an den Querschnitt des Schlittens (3) angepaßten Öffnungsquerschnitt zur Aufnahme des Schlittens (3) ausgebildet ist beziehungsweise sind.

9. Linearantrieb nach einem der vorhergehenden Ansprüche,
**dadurch gekennzeichnet,**
**daß** die Motorelemente (4, 5) eisenbehaftete Spulen umfassen.

10. Linearantrieb nach einem der vorhergehenden Ansprüche,
**dadurch gekennzeichnet,**
**daß** die Gaslagerelemente (12, 14, 16, 18) in ihrer jeweiligen Lagerfläche eine Mehrzahl von Gasaustrittsdüsen aufweisen, die von einem Druckgas beaufschlagt sind, so daß ein aus den Gasaustrittsdüsen austretender Gasstrom ein homogenes Gaspolster zwischen dem jeweiligen Gaslagerelement (12, 14, 16, 18) und der jeweiligen Oberfläche des Schlittens (3) bildet.

11. Linearantrieb (101) nach Anspruch 1, 2 oder 3,
- wobei der Schlitten (103) mittels Gaslagerelementen (116, 118, 124, 126) in einer Stützebene (X) und in einer dazu orthogonalen Führungsebene (Y) oder parallel zu dieser am Führungskörper (102) berührungsfrei gelagert ist,
- wobei der Schlitten (103) an seinen beiden Längsseiten mit jeweils zumindest einem Spulen aufweisenden Schwert (146, 148) versehen ist, das sich parallel zur Stützebene (X) erstreckt und
- wobei zwei seitliche, zueinander parallele stationäre Magnetschienen (104, 105) vorgesehen sind, die jeweils eine Magnetführungsnut (132, 132') zur berührungslosen Aufnahme der Schwerter (146, 148) aufweisen, wodurch Magnetschienen (104, 105) und Schwerter (146, 148) zwei parallel zueinander angeordnete Linearmotoren (106, 107) bilden.

12. Linearantrieb nach Anspruch 11,
**dadurch gekennzeichnet,**
**daß** der Schlitten (103) einen Kufenträger (134) aufweist, der mit den Gaslagerelementen (116, 118, 124, 126) versehen ist.

13. Linearantrieb nach Anspruch 12,
**dadurch gekennzeichnet,**
**daß** der stationäre Führungskörper (102) mit einer Schlittenführungsnut (110) versehen ist, deren seitliche Nutwandungen parallel zur Führungsebene (Y) verlaufende Führungsflächen (112, 114) bestimmen, auf denen erste Gaslagerelemente (116, 118) geführt sind, die beidseitig an einem Kufenschwert (136) des im Querschnitt T-förmigen Kufenträgers (134) vorgesehen sind,
wobei vorzugsweise der stationäre Führungskörper (102) in der Stützebene (X) verlaufende Stützflächen (120, 122) aufweist, auf denen mit zweiten Gaslagerelementen (124, 126) versehene seitliche Kufenschenkel (138, 140) des im Querschnitt T-förmigen Kufenträgers (134) geführt sind und wobei weiter vorzugsweise die Gaslagerelemente (116, 118, 124, 126) in ihrer der jeweiligen Stützfläche (120, 122) beziehungsweise der jeweiligen Führungsfläche (112, 114) gegenüber gelegenen Lagerfläche eine Mehrzahl von Gasaustrittsdüsen aufweisen, die von einem Druckgas beaufschlagt sind, so daß ein aus den Gasaustrittsdüsen austretender Gasstrom ein homogenes Gaspolster zwischen dem jeweiligen Gaslagerelement (116, 118, 124, 126) und der jeweiligen Stützfläche (120, 122) beziehungsweise der jeweiligen Führungsfläche (112, 114) bildet.

14. Linearantrieb nach einem der vorhergehenden Ansprüche,
**dadurch gekennzeichnet,**
**daß** die Gasaustrittsdüsen in der Lagerfläche eines jeweiligen Gaslagerelements (12, 14, 16, 18; 116, 118, 124, 126) von mittels eines energiereichen Strahls gebohrten Mikrolöchern gebildet sind, die vorzugsweise kegelförmig ausgebildet sind, wobei deren engster Querschnitt an der Mündung in die Lagerfläche gelegen ist.

15. Linearantrieb nach einem der vorhergehenden Ansprüche,
**dadurch gekennzeichnet,**
**daß** der Schlitten (3; 103) gegenüber dem Führungskörper (2, 2'; 102) durch auf Bereiche des Schlittens (3; 103) wirkenden Unterdruck vorgespannt ist.

16. Linearantrieb nach einem der vorhergehenden Ansprüche,
**dadurch gekennzeichnet,**
**daß** die Linearmotoren (8, 9; 106, 107) von einer gemeinsamen Regelungseinrichtung beaufschlagt sind,
wobei vorzugsweise der Schlitten (3; 103) an einer Außenfläche mit einem Maßstab (20; 150) versehen ist, der sich bevorzugt über die gesamte Länge des Schlittens (3; 103) in Richtung der Längsachse (Z) und damit in Richtung der Bewegungsbahn (W) erstreckt,
dem Maßstab (20; 150) gegenüber gelegen zumindest ein stationärer, gestellfester Lesekopf (22; 156) zur Abtastung der Einteilung des Maßstabs (20; 150) angeordnet ist und
ein vom Lesekopf (22; 156) gebildetes Signal an die Regelungseinrichtung zur Regelung des Vorschubs des Schlittens (3; 103) geleitet wird
und wobei weiter vorzugsweise der Schlitten (3; 103) an seiner Unterseite im Bereich des Führungskörpers (2, 2'; 102) mit dem zum Führungskörper (2, 2'; 102) weisenden Maßstab (20; 150) versehen ist, und
der zumindest eine Lesekopf (22; 156) im Führungskörper (2, 2'; 102) angeordnet ist.

## Claims

1. Linear drive (1; 101; 201) comprising
- at least one stationary guide body (2, 2'; 102),
- a carriage (3; 103; 203) which can be moved in a translatory manner along a movement path (W) determined by the guide body (2, 2'; 102) and
- a linear motor (8; 106; 207), which has at least a first, stationary motor element (4, 5; 104, 105) and a second, movable motor element (6, 7; 146, 148), which is connected to the carriage (3; 103; 203),
- wherein the movable unit consisting of the carriage (3; 103; 203) and movable motor element (6, 7; 146, 148) is mounted in a contactless manner on a stationary part of the linear drive by means of gas bearing elements (12, 14, 16, 18; 116, 118, 124, 126),
**characterised in that**
- at least one further linear motor (9; 107; 208, 209) is provided,
- **in that** the linear motors (8, 9; 106, 107; 207, 208, 209) are arranged symmetrically with respect to the movement path (W),
- wherein the resulting effective centre of action of the drive forces of the linear motors (8, 9; 106, 107; 206, 207, 208), viewed in the cross-section of the carriage, coincides with the total centre of gravity of the mass of the movable unit consisting of the carriage (3; 103; 203) and movable motor elements (6, 7; 146, 148).

2. Linear drive (1; 101) according to claim 1, **characterised in that** a connecting line (V; L) of the respective effective centres of action (S₁, S₂) of the drive forces of the linear motors (8, 9; 106, 107) arranged on either side of the carriage (3; 103), viewed in the cross-section of the carriage (3; 103), extends substantially through the total centre of gravity (S₀) of the mass of the movable unit consisting of the carriage (3; 103) and movable motor elements (6, 7; 146, 148).

3. Linear drive (201) according to claim 1, **characterised in that** at least three linear motors (206, 207, 208) arranged symmetrically with respect to the movement path (W) are provided, wherein the connecting lines (L₁, L₂, L₃) between mutually adjacent centres of action (S₁, S₂, S₃) of the drive forces of the linear motors (206, 207, 208) arranged around the carriage (203), viewed in the cross-section of the carriage, form an imaginary surface (A) and wherein the centroid (A₀) of this surface (A), which forms the resulting effective centre of action, substantially coincides with the total centre of gravity (S₀) of the mass of the movable unit consisting of the carriage and movable motor elements.

4. Linear drive (1) according to claim 1, 2 or 3, wherein the guide body (2, 2') at least partially encompasses the carriage (3) and wherein the carriage (3) can be moved in a translatory manner in the direction of its longitudinal axis (Z),
- wherein the carriage (3) is mounted in a contactless manner by means of gas bearing elements (12, 14, 16, 18) provided in the inner faces of the guide body (2, 2') facing the carriage (3),
- wherein the carriage (3) is provided on two longitudinal sides, which are remote from one another, with at least one magnet arrangement (6, 7), in each case, which extends parallel to the longitudinal axis (Z) of the carriage, in each case,
- wherein two lateral, mutually parallel, stationary motor elements (4, 5) having coils are provided, which in each case lie opposite a magnet arrangement (6, 7),
- wherein the magnet arrangements (6, 7), viewed in the direction of the longitudinal axis (Z) of the carriage, are distinctly shorter than the motor elements (4, 5).

5. Linear drive according to claim 3, **characterised in that** the guide body (2, 2') has a U-shaped configuration and encompasses the carriage (3) on three sides.

6. Linear drive according to any one of the preceding claims, **characterised in that**
- two guide bodies (2, 2') are provided, of which one (2) is provided in the region of a respective first end (4', 5') of the motor elements (4, 5) arranged parallel to one another and the other (2') is provided in the region of the respective second end (4", 5") of the motor elements (4, 5) which are arranged parallel to one another, wherein the two guide bodies (2, 2') are aligned coaxially with one another, and
- **in that** the longitudinal extent of the carriage (3) is greater than the spacing between the two guide bodies (2, 2').

7. Linear drive according to any one of the preceding claims, **characterised in that** the carriage (3) is configured as a hollow tube.

8. Linear drive according to any one of the preceding claims, **characterised in that** the carriage (3) has a rectangular, preferably square, cross-section and **in that** the guide body or the guide bodies (2, 2') is or are configured as a rectangular U or as a rectangular ring, preferably as a square ring, with an opening cross-section matched to the cross-section of the carriage (3) to receive the carriage (3).

9. Linear drive according to any one of the preceding claims, **characterised in that** the motor elements (4, 5) comprise iron-containing coils.

10. Linear drive according to any one of the preceding claims, **characterised in that** the gas bearing elements (12, 14, 16, 18), in their respective bearing face, have a plurality of gas discharge nozzles, which are loaded by a compressed gas so that a gas flow exiting from the gas discharge nozzles forms a homogeneous gas cushion between the respective gas bearing element (12, 14, 16, 18) and the respective surface of the carriage (3).

11. Linear drive (101) according to claim 1, 2 or 3,
- wherein the carriage (103) is mounted on the guide body (102) in a contactless manner by means of gas bearing elements (116, 118, 124, 126) in a support plane (X) and in a guide plane (Y), which is orthogonal thereto, or parallel thereto,
- wherein the carriage (103) is provided on its two longitudinal sides with, in each case, at least one blade (146, 148) which has coils, and which extends parallel to the support plane (X) and
- wherein two lateral stationary magnet rails (104, 105) which are parallel to one another, are provided and, in each case, have a magnet guide groove (132, 132') for contactlessly receiving the blades (146, 148), so the magnet rails (104, 105) and blades (146, 148) form two linear motors (106, 107) arranged parallel to one another.

12. Linear drive according to claim 11, **characterised in that** the carriage (103) has a skid carrier (134), which is provided with the gas bearing elements (116, 118, 124, 126).

13. Linear drive according to claim 12, **characterised in that** the stationary guide body (102) is provided with a carriage guide groove (110), the lateral groove walls of which determine guide faces (112, 114) extending parallel to the guide plane (Y), on which first gas bearing elements (116, 118) are guided, which are provided on either side of a skid blade (136) of the skid carrier (134) which is T-shaped in cross-section, wherein the stationary guide body (102) preferably has support faces (120, 122), extending in the support plane (X), on which lateral skid legs (138, 140) provided with two gas bearing elements (124, 126), of the skid carrier (134) which is T-shaped in cross-section are guided and wherein, furthermore, the gas bearing elements (116, 118, 124, 126), in their bearing face opposing the respective support face (120, 122) or the respective guide face (112, 114), have a plurality of gas discharge nozzles, which are loaded by a compressed gas, so that a gas flow exiting from the gas discharge nozzles forms a homogeneous gas cushion between the respective gas bearing element (116, 118, 124, 126) and the respective support face (120, 122) or the respective guide face (112, 114).

14. Linear drive according to any one of the preceding claims, **characterised in that** the gas discharge nozzles in the bearing face of a respective gas bearing element (12, 14, 16, 18; 116, 118, 124, 126) are formed by micro-holes bored by means of a high-energy beam, which are preferably conical, their narrowest cross-section being placed at the mouth in the bearing face.

15. Linear drive according to any one of the preceding claims, **characterised in that** the carriage (3; 103) is prestressed relative to the guide body (2, 2'; 102) by reduced pressure acting on regions of the carriage (3; 103).

16. Linear drive according to any one of the preceding claims, **characterised in that** the linear motors (8, 9; 106, 107) are subjected to a common regulating device, wherein the carriage (3; 103) is preferably provided on an outer face with a scale (20; 150), which preferably extends over the entire length of the carriage (3; 103) in the direction of the longitudinal axis (Z) and thus in the direction of the movement path (W), at least one stationary frame-fixed reading head (22; 156) is arranged opposite the scale (20; 150) for scanning the graduation of the scale (20; 150) and a signal formed by the reading head (22; 156) is fed to the regulating device to regulate the feed of the carriage (3; 103) and wherein, furthermore, the carriage (3; 103) is preferably provided on its underside in the region of the guide body (2, 2'; 102) with the scale (20; 150) facing the guide body (2, 2'; 102), and the at least one reading head (22; 156) is arranged in the guide body (2, 2'; 102).

## Revendications

1. Mécanisme d'entraînement linéaire (1 ; 101 ; 201) comprenant :
- au moins un corps de guidage stationnaire (2, 2' ; 102),
- un chariot (3 ; 103 ; 203) déplaçable en translation le long d'une voie de déplacement (W) définie par le corps de guidage (2, 2' ; 102), et
- un moteur linéaire (8 ; 106 ; 207), qui comprend au moins un premier élément de moteur stationnaire (4, 5 ; 104, 105) et un deuxième élément de moteur mobile (6, 7 ; 146, 148) qui est relié au chariot (3 ; 103 ; 203),
- l'unité mobile formée par le chariot (3 ; 103 ; 203) et par l'élément de moteur mobile (6, 7 ; 146, 148) étant monté sans contact sur une partie stationnaire du mécanisme d'entraînement linéaire au moyen d'éléments de palier à gaz (12, 14, 16, 18 ; 116, 118, 124, 126),
**caractérisé en ce que**
- il est prévu au moins un autre moteur linéaire (9 ; 107 ; 208 ; 209),
- les moteurs linéaires (8, 9 ; 106, 107 ; 207, 208, 209) sont agencés symétriquement par rapport à la voie de déplacement (W),
- le barycentre d'action résultant des forces d'entraînement des moteurs linéaires (8, 9 ; 106, 107 ; 206, 207, 208), observé en section transversale du chariot, coïncide avec le centre de gravité global de l'unité mobile formée par les chariots (3 ; 103 ; 203) et par les éléments de moteur mobiles (6, 7 ; 146, 148).

2. Mécanisme d'entraînement linéaire (1 ; 101) selon la revendication 1,
**caractérisé en ce qu'**une ligne de liaison (V ; L) des barycentres d'action respectifs (S₁, S₂) des forces d'entraînement des moteurs linéaires (8, 9 ; 106, 107) agencés des deux côtés du chariot (3 ; 103), observée en section transversale du chariot (3 ; 103), s'étend essentiellement à travers le centre de gravité global (S₀) de l'unité mobile formée par les chariots (3 ; 103) et par les éléments de moteur mobiles (6, 7 ; 146, 148).

3. Mécanisme d'entraînement linéaire (201) selon la revendication 1,
**caractérisé en ce qu'**il est prévu au moins trois moteurs linéaires (206, 207, 208) agencés symétriquement par rapport à la voie de déplacement (W), les lignes de liaison (L1, L2, L3) entre des barycentres d'action mutuellement voisins (S1, S2, S3) des forces d'action des moteurs linéaires (206, 207, 208) agencés tout autour du chariot (203), observées en section transversale du chariot, forment une surface imaginaire (A), et le barycentre (A₀) de cette surface (A), qui forme le barycentre d'action résultant, coïncide essentiellement avec le centre de gravité global (S₀) de l'unité mobile formée par le chariot et par les éléments de moteur mobiles.

4. Mécanisme d'entraînement linéaire (1) selon la revendication 1, 2 ou 3,
dans lequel le corps de guidage (2, 2') entoure au moins partiellement le chariot (3), et le chariot (3) est déplaçable en translation en direction de son axe longitudinal (Z),
- le chariot (3) est monté sans contact au moyen d'éléments de palier à gaz (12, 14, 16, 18) prévus dans les surfaces intérieures du corps de guidage (2, 2') tournées vers le chariot (3),
- le chariot (3) est pourvu, au niveau de deux côtés longitudinaux détournés l'un de l'autre, d'au moins un agencement à aimants (6, 7) respectif, qui s'étend respectivement parallèlement à l'axe longitudinal (Z) du chariot,
- il est prévu deux éléments de moteurs stationnaires latéraux (4, 5), parallèles l'un à l'autre et comportant des bobines, qui sont respectivement à l'opposé d'un agencement à aimants (6, 7), et
- les agencements à aimants (6, 7), vus en direction de l'axe longitudinal (Z) du chariot, sont nettement plus courts que les éléments de moteur (4, 5).

5. Mécanisme d'entraînement linéaire selon la revendication 3,
**caractérisé en ce que** le corps de guidage (2, 2') présente une configuration en forme de U et entoure le chariot (3) sur trois côtés.

6. Mécanisme d'entraînement linéaire selon l'une des revendications précédentes,
**caractérisé en ce que**
- il est prévu deux corps de guidage (2, 2'), dont l'un (2) est prévu dans la région d'une première extrémité respective (4', 5') des éléments de moteur (4, 5) agencés parallèlement l'un à l'autre, et dont l'autre (2') est prévu dans la région de la deuxième extrémité respective (4", 5") des éléments de moteur (4, 5) agencés parallèlement l'un à l'autre, les deux corps de guidage (2, 2') étant agencés coaxialement l'un à l'autre, et
- l'extension longitudinale du chariot (3) est supérieure à la distance entre les deux corps de guidage (2, 2').

7. Mécanisme d'entraînement linéaire selon l'une des revendications précédentes, **caractérisé en ce que** le chariot (3) est réalisé sous forme de tube creux.

8. Mécanisme d'entraînement linéaire selon l'une des revendications précédentes, **caractérisé en ce que** le chariot (3) présente une section transversale rectangulaire, de préférence carrée, et **en ce que** le ou les corps de guidage (2, 2') est/sont réalisé(s) sous forme de U rectangulaire ou de bague rectangulaire, de préférence sous forme de bague carrée avec une section d'ouverture adaptée à la section du chariot (3), pour la réception du chariot (3).

9. Mécanisme d'entraînement linéaire selon l'une des revendications précédentes, **caractérisé en ce que** les éléments de moteur (4, 5) comprennent des bobines en fer.

10. Mécanisme d'entraînement linéaire selon l'une des revendications précédentes, **caractérisé en ce que** les éléments de palier à gaz (12, 14, 16, 18) comportent dans leur surface de palier respective une pluralité de buses de sortie de gaz qui sont alimentées par un gaz sous pression, de sorte que le courant gazeux qui sort des buses de sortie de gaz forme un coussin de gaz homogène entre l'élément de palier à gaz respectif (12, 14, 16, 18) et la surface respective du chariot (3).

11. Mécanisme d'entraînement linéaire selon la revendication 1, 2 ou 3,
- dans lequel le chariot (103) est monté sans contact sur le corps de guidage (103) au moyen d'éléments de palier à gaz (116, 118, 124, 126) dans un plan de soutien (X) et dans un plan de guidage (Y) orthogonal à celui-ci, ou parallèlement à ce plan,
- dans lequel le chariot (103) est pourvu sur ses deux côtés longitudinaux d'une lame (146, 148) présentant une bobine et s'étendant parallèlement au plan de soutien (X), et
- dans lequel il est prévu deux rails magnétiques latéraux stationnaires (104, 105) mutuellement parallèles, qui présentent chacun une gorge de guidage à aimants (132,132') pour la réception sans contact des lames (146, 148), grâce à quoi les rails à aimants (104, 105) et les lames (146, 148) forment deux moteurs linéaires (106, 107) agencés parallèlement l'un à l'autre.

12. Mécanisme d'entraînement linéaire selon la revendication 11,
**caractérisé en ce que** le chariot (103) comprend un porte-patin (134), lequel est pourvu des éléments de palier à gaz (116, 118, 124, 126).

13. Mécanisme d'entraînement linéaire selon la revendication 12,
**caractérisé en ce que** le corps de guidage stationnaire (102) est doté d'une gorge de guidage de chariot (110), dont les parois de gorge latérales définissent des surfaces de guidage (112, 114) s'étendant parallèlement au plan de guidage (Y), sur lesquelles sont guidés des premiers éléments de palier à gaz (116, 118) qui sont prévus des deux côtés sur une lame de patin (136) du porte-patin (134) à section en forme de T,
le corps de guidage stationnaire (102) comporte de préférence des surfaces de soutien (120, 122) qui s'étendent dans le plan de soutien (X) et sur lesquelles sont guidées des branches de patin latérales (138, 140), dotées de seconds éléments de palier à gaz (124, 126), du porte-patin (134) à section en forme de T, et les éléments de palier à gaz (116, 118, 124, 126) comportent en outre de préférence une pluralité de buses de sortie de gaz dans leur surface de palier située face à la surface de soutien respective (120, 122) ou respectivement face à la surface de guidage respective (112, 114), lesdites buses étant alimentées avec un gaz sous pression de sorte qu'un courant de gaz sortant des buses de sortie de gaz forme un coussin de gaz homogène entre l'élément de palier à gaz respectif (116, 118, 124, 126) et la surface de soutien respective (120, 122), ou la surface de guidage respective (112, 114).

14. Mécanisme d'entraînement linéaire selon l'une des revendications précédentes, **caractérisé en ce que** les buses de sortie de gaz sont formées dans la surface de palier d'un élément de palier à gaz respectif (12, 14, 16, 18 ; 116, 118, 124, 126) par des micro-trous percés au moyen d'un jet à forte énergie, lesdits trous ayant de préférence une forme conique, et leur section la plus étroite étant située au niveau de l'embouchure dans la surface de palier.

15. Mécanisme d'entraînement linéaire selon l'une des revendications précédentes, **caractérisé en ce que** le chariot (3, 103) est précontraint par rapport au corps de guidage (2, 2' ; 102) par une dépression agissant sur des zones du chariot (3 ; 103).

16. Mécanisme d'entraînement linéaire selon l'une des revendications précédentes, **caractérisé en ce que** les moteurs linéaires (8, 9 ; 106, 107) sont alimenté par un dispositif de régulation commun, le chariot (3,103) étant pourvu de préférence d'une échelle (20 ; 150) sur une surface extérieure, qui s'étend de préférence sur la longueur totale du chariot (3 ; 103) en direction de l'axe longitudinal (Z) et donc en direction de la voie de déplacement (W), il est prévu au moins une tête de lecture stationnaire (22 ; 156) solidaire du châssis, située à l'opposé de l'échelle (20 ; 150) pour palper la graduation de l'échelle (20 ; 150), un signal formé par la tête de lecture (22 ; 156) est transmis au dispositif de régulation pour réguler l'avance du chariot (3 ; 103), et le chariot (3 ; 103) est en outre le pourvu de préférence sur sa face intérieure et dans la zone du corps de guidage (2, 2' ; 102) de l'échelle (20 ; 150) dirigée vers le corps de guidage (2 ; 2' ; 120), et
ladite au moins une tête de lecture (22 ; 156) est agencée dans le corps de guidage (2, 2' ; 102).
